# FASCICULE DE BREVET EUROPEEN

(11) **EP 2 319 956 B1**
(45) Date de publication et mention de la délivrance du brevet: **21.03.2012**
(21) Numéro de dépôt: 10354056.3
(22) Date de dépôt: 30.09.2010
(51) Int. Cl.: C23C 18/16, C23C 18/31, C23C 18/54

(54) **Métallisation d'une zone en silicium poreux par réduction in situ et application à une pile à combustible**
Metallisierung einer Zone von porösem Silizium durch in situ Reduzierung und Anwendung in einer Brennstoffzelle
Metallizing a zone of porous silicon by in situ reduction and application in a fuel cell

(30) Priorité: 08.10.2009 FR 0904814
(43) Date de publication de la demande: 11.05.2011
(73) Titulaire: Commissariat à l'Énergie Atomique et aux Énergies Alternatives, 75015 Paris (FR)
(72) Inventeur: Gaillard, Frédéric-Xavier, 38500 Voiron (FR); Raccurt, Olivier, 38730 Chélieu (FR)
(74) Mandataire: Dubreu, Sandrine

(56) Documents cités:
- WO-A1-2004/061991
- CN-A- 1 966 765

## Description

### Domaine technique de l'invention

L'invention concerne un procédé de métallisation d'au moins une zone en silicium poreux comprenant des groupements hydroxydes terminaux ainsi que l'utilisation d'une zone métallisée obtenue par un tel procédé comme collecteur de courant d'une pile à combustible.

### État de la technique

Le silicium poreux est, en général, obtenu par voie électrochimique éventuellement accompagnée d'une illumination (voie dite photoélectrochimique), et plus précisément par dissolution anodique en présence d'acide fluorhydrique, à partir d'une couche en silicium monocristallin.

Un tel procédé permet, en fonction des paramètres utilisés (solution électrolytique, courant, tension, illumination,...) et de la nature même du silicium (dopage, conditions de dopage, résistivité du substrat...) d'obtenir une porosité prédéterminée. Le silicium peut, ainsi, être microporeux avec un diamètre moyen de pore inférieur à 2nm, mésoporeux avec un diamètre moyen de pore compris entre 2nm et 50nm ou macroporeux avec un diamètre moyen de pore supérieur à 50nm.

D'une façon générale, les substrats de type p+ présentent une forte densité de porteurs de charge (de l'ordre 10¹⁹ atomes/cm³) avec une résistivité de l'ordre de quelques milliOhm.cm. Ils sont donc facilement rendus poreux dans une solution d'acide fluorhydrique, sans illumination, et ils présentent, avantageusement, des pores de type mésoporeux. Par contre, les substrats en silicium de type n ou n+ nécessitent une illumination. Enfin, les substrats en silicium de type p peuvent être rendus poreux sans illumination. Mais, comme ils présentent une plus forte résistivité (de l'ordre de quelques Ohm.cm et plus, ce qui équivaut à un dopage de bore de l'ordre de 10¹⁵ atomes/cm), ces substrats de type p subissent, en général, une implantation en face arrière (FAR) pour favoriser la réalisation des pores.

Ainsi, en fonction de ces paramètres (dopage FAR, résistivité du substrat), du silicium poreux de type microporeux, mésoporeux et macroporeux peut être obtenu sur plusieurs micromètres d'épaisseur. À titre d'exemple, un substrat en silicium de type p+ a été rendu mésoporeux dans un milieu d'acide fluorhydrique de 15%, en appliquant une densité de courant de l'ordre de 5mA/cm². De plus, le contrôle de ces paramètres permet de faire varier le taux de porosité de 10% à 90%.

D'autre part, le fait de rendre le silicium poreux par dissolution anodique dans de l'acide fluorhydrique augmente la résistivité électrique du substrat de plusieurs ordres de grandeur. La résistivité électrique du substrat passe alors de quelques milliOhms.centimètres (mΩ.cm) à quelques ohms.centimètres (Ω.cm). Des valeurs de l'ordre de 10⁵ Ω.cm et plus ont, par exemple, été mesurées pour des couches en silicium présentant une haute porosité, comme rapporté dans l'article « Classification of Electrical Properties of Porous Silicon » de S.P. Zimin et al. (Semiconductors, Vol. 34, N°3, 2000, pp353-357). Dans cet article, S.P Zimin et al. ont, plus particulièrement, établi une classification des propriétés électriques du silicium poreux en quatre groupes, en fonction de la distribution des régions déplétées dans des siliciums poreux présentant des morphologies différentes (taille des pores, taux de porosité, dispersion des pores au sein du substrat...).

Ainsi, il est souvent nécessaire de faire baisser la résistivité d'un substrat en silicium poreux, avant de l'utiliser dans de nombreuses applications.

Or, même si de nombreux travaux scientifiques se sont intéressés aux mécanismes de conduction électrique du silicium poreux et, plus particulièrement, aux changements de résistivité observés une fois le silicium massif rendu poreux, il n'y a pas eu beaucoup de développements consacrés à l'amélioration de ce paramètre.

Une des voies permettant d'obtenir une résistivité plus faible du silicium poreux consiste à le métalliser, c'est-à-dire à apporter un dépôt métallique afin d'augmenter la conductivité électrique du substrat.

Parmi les procédés de métallisation disponibles, on peut citer l'implantation ionique, le dépôt de type dépôt chimique en phase vapeur ou CVD, le dépôt de type dépôt physique en phase vapeur ou PVD, le dépôt par pulvérisation, le dépôt électrochimique ou de type sans électrolyse.

Cependant, ces procédés ne sont pas toujours adaptés au type de matériau obtenu ou bien à l'architecture du substrat concerné. Ils sont, de plus, complexes à mettre en oeuvre.

Ainsi, dans le cas d'une implantation de type ionique ou plasma, le dopage de type Bore, Arsenic... ne se fait qu'en surface de la couche considérée, sur quelques nanomètres d'épaisseur. Une telle technique ne permet donc pas de métalliser un substrat en silicium sur toute son épaisseur (par exemple de l'ordre de quelques micromètres). De plus, la résistivité électrique obtenue superficiellement peut évoluer dans le temps avec une telle méthode.

La métallisation par dépôt par exemple de type CVD, PVD ou pulvérisation permet de former une couche métallique en surface du substrat. Cependant, le métal peut avoir des difficultés à se diffuser dans la profondeur du substrat poreux. Le même problème de diffusion peut également se poser avec la métallisation par voie électrochimique. En effet, les pores peuvent se boucher en superficie du substrat en silicium poreux, ce qui empêche une diffusion homogène de la solution chimique à travers les pores du silicium et dans l'épaisseur du substrat.

En fait, les conditions d'une bonne métallisation sont d'autant plus délicates que les dimensions des pores sont faibles. Ainsi, le problème d'obtenir une bonne métallisation se pose, plus particulièrement, dans le cas du silicium mésoporeux et du silicium microporeux.

### Objet de l'invention

L'invention a pour objet de proposer un nouveau procédé de métallisation d'au moins une zone en silicium poreux comprenant des groupements hydroxydes terminaux, amélioré et facilité par rapport aux techniques selon l'art antérieur et permettant, plus particulièrement, une métallisation homogène dans toute l'épaisseur de la zone à métalliser et dans des pores difficilement accessibles.

L'invention a également pour objet l'utilisation d'une zone métallisée obtenue par un tel procédé comme couche de diffusion conductrice électriquement d'une pile à combustible.

Selon l'invention, ces objets sont atteints par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 4 représentent à titre d'illustration le mécanisme de formation de particules d'argent à la surface d'un substrat en silicium poreux, greffé par les fonctions chimiques thiol et éthylène diamine.
- la figure 5 est un cliché obtenu par microscopie électronique à balayage d'une coupe d'un substrat en silicium poreux comprenant des particules d'argent générées in situ à l'intérieur des pores.
- les figures 6 et 7 sont des agrandissements de deux zones particulières du substrat en coupe représenté sur la figure 5.
- les figures 8 à 11 représentent schématiquement différentes étapes de réalisation d'une pile à combustible comprenant un substrat en silicium poreux, dont certaines parties ont été métallisées pour former les couches de diffusion conductrices électriquement de la pile à combustible.
- la figure 12 représente schématiquement en coupe une variante de réalisation d'une pile à combustible selon la figure 11.

### Description de modes particuliers de réalisation

Il est proposé de métalliser au moins une zone en silicium poreux en réalisant, lors d'une même étape, la réduction in situ d'ions métalliques dissous dans une solution aqueuse et la fixation des particules métalliques obtenues sur ladite zone. Avantageusement, la zone en silicium poreux est mésoporeuse. Le diamètre moyen des pores de ladite zone est, dans ce cas, plus particulièrement, compris entre 2nm et 50nm.

Cette étape consiste, en particulier, à mettre en contact la solution contenant les ions métalliques avec la zone à métalliser, dont la surface a été préalablement fonctionnalisée pour permettre la réduction in situ des ions métalliques et la fixation des particules métalliques.

Pour cela, la surface de la zone à métalliser, c'est-à-dire la totalité de la surface des pores de la zone à métalliser, comprend des groupements hydroxydes terminaux permettant une fonctionnalisation particulière et plus particulièrement un greffage particulier. En particulier, la surface de la zone à métalliser peut être munie d'un film mince en oxyde de silicium comprenant les groupements hydroxydes terminaux (Si-O-H). Le film mince en oxyde de silicium peut par exemple être l'oxyde de silicium natif présent à la surface de tout matériau en silicium, poreux ou non. Il peut, aussi, s'agir d'un oxyde de silicium obtenu intentionnellement par voie thermique. Selon une alternative, la surface de la zone à métalliser peut être initialement non oxydée en surface. Dans ce cas, la surface de la zone à métalliser peut subir un traitement destiné à permettre la création de groupements hydroxydes terminaux, avant ou pendant l'opération de greffage.

Par ailleurs, la surface de la totalité des pores de la zone à métalliser est fonctionnalisée par liaisons covalentes, c'est-à-dire par greffage, par deux types particuliers et distincts de fonctions chimiques. Le greffage est rendu possible par la présence des groupements hydroxydes terminaux à la surface des pores, avantageusement munie d'un film mince en oxyde de silicium. La première fonction utilisée est une fonction chimique chélatante pour les ions métalliques et/ou pour le métal correspondant aux ions métalliques, tandis que la seconde fonction est une fonction chimique réductrice pour les ions métalliques.

Les fonctions chimiques de type chélatant peuvent être, par exemple, un thiol, un dithiane, de l'EDTA, un acide thioglycolique, un acide carboxylique, un acide phosphonique, un acide sulfonique et leurs dérivés. Par dérivés, on entend des composés pouvant former lesdites fonctions chimiques de type chélatant par hydrolyse.

Les fonctions chimiques de type réducteur peuvent, par exemple être choisies parmi une amine, de l'éthylène diamine, un sucre, un acide ascorbique, un ascorbate, l'hydroquinone et leurs dérivés. Par dérivés, on entend des composés qui peuvent former lesdites fonctions chimiques par hydrolyse. De telles fonctions chimiques de type réducteur permettent, avantageusement de réduire à température ambiante les ions des métaux suivants : argent, or, cuivre, platine, ruthénium, nickel, plomb et cadmium.

De plus, la solution aqueuse destinée à être mise en contact avec la zone à métalliser, une fois celle-ci fonctionnalisée par les deux types de fonctions chimiques contient au moins un solvant organique favorisant ladite mise en contact entre les ions métalliques et la zone à métalliser. Elle contient, en particulier, un ou plusieurs solvants destinés à permettre une bonne diffusion de la solution à l'intérieur de la zone à métalliser, afin d'atteindre tous les pores même les plus inaccessibles.

À titre d'exemple, un substrat en silicium poreux a été métallisé avec des particules d'argent, en utilisant le couple chélatant/réducteur constitué par un thiol (-SH) et de l'éthylène diamine (-NH-CH₂-CH₂-NH₂) pour réaliser l'étape de greffage préalable à l'étape de mise en contact entre le substrat et une solution aqueuse contenant des ions Ag⁺.

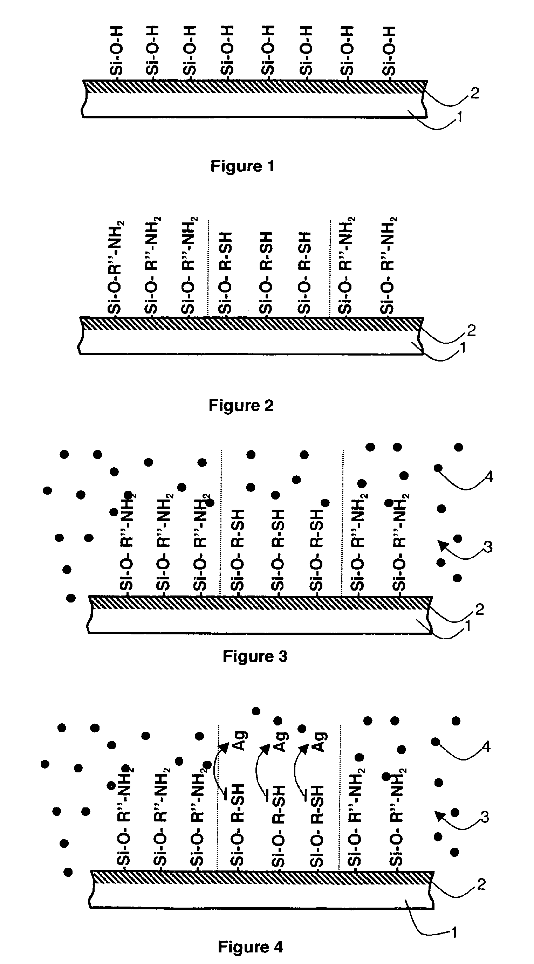

Les figures 1 à 4 illustrent, en particulier, les différentes étapes permettant la formation des particules d'argent pour cet exemple particulier.

Le substrat en silicium utilisé dans cet exemple est un substrat en silicium monocristallin massif, rendu poreux au moins superficiellement par traitement d'électrogravure dans de l'acide fluorhydrique. Ainsi, le traitement d'électrogravure permet d'obtenir sur au moins une partie du substrat poreux une porosité ouverte, avec des pores directionnels (de la surface libre vers l'intérieur du cristal). Avantageusement, le substrat en silicium est rendu mésoporeux. À titre d'exemple, le substrat en silicium est rendu poreux sur une profondeur comprise entre quelques centaines de nanomètres et quelques micromètres, avec un taux de porosité de l'ordre de 50% à 70 % et une taille moyenne de pores comprise entre 20nm et 30 nm. De plus, cette partie poreuse du substrat en silicium est, avantageusement, munie d'un film mince d'oxyde de silicium natif.

La figure 1 illustre la partie 1 du substrat en silicium, rendue poreuse, munie d'un film mince 2 en oxyde de silicium. Pour des raisons de clarté, le film mince 2 est représenté sur la figure 1 comme un film mince superficiel, formé en surface du substrat en silicium 1. Bien évidemment, le film mince en oxyde de silicium recouvre non seulement la partie visible du substrat en silicium mais est aussi la totalité de la surface des pores internes au substrat en silicium. Ainsi, la figure 1 permet simplement d'illustrer le fait que le substrat en silicium comprend des groupements terminaux de type Si-O-H destinés à permettre le greffage du substrat par le thiol et l'éthylène diamine.

L'étape de greffage est, en particulier, réalisée par immersion du substrat 1 dans une solution comprenant de l'eau, de l'éthanol, un précurseur pour la fonction réductrice et un précurseur pour la fonction chélatante. Le précurseur de la fonction thiol est, avantageusement, le 3-mercaptopropyltriéthoxysilane (HS-(CH₂)₃-Si-(OCH₂CH₃)₃) tandis que le précurseur utilisé pour la fonction éthylène diamine est le 2-(aminoéthyl)aminopropyltriméthoxysilane (NH₂CH₂CH₂NH-(CH₂)₃-Si-(OCH₃)₃ ou un de ces oligomères. Les deux précurseurs sont, de plus, introduits avantageusement dans le mélange en quantités égales.

À titre d'exemple, la solution utilisée pour réaliser le greffage du substrat 1 est formée en mélangeant 9mL d'eau ultrapure, 1 mL d'éthanol, 150µL de Bis (3 trimethoxysilyl)propylethylènediamine et 150µL de 3-mercaptopropyltriéthoxysilane. Le mélange peut être réalisé sous agitation magnétique pendant 15 minutes. Les fonctions alcoxy du (3 trimethoxysilyl)propylethylènediamine s'hydrolysent en solution pour former des oligomères d'(aminoéthyl)aminopropylsiloxanes qui réagissent avec la surface du substrat 1.

Puis, l'étape de greffage est, ensuite, réalisée en immergeant le substrat 1 dans la solution contenant les précurseurs pendant environ 3 heures, à température ambiante. Avantageusement, la solution peut être agitée pendant l'immersion, afin de garantir une concentration homogène au cours de l'étape de fonctionnalisation.

Ensuite, l'immersion du substrat 1 dans la solution contenant les précurseurs peut être suivie d'une étape d'élimination des précurseurs n'ayant pas réagi. Cette étape d'élimination est, par exemple, réalisée par rinçage du substrat dans des bains successifs, respectivement formés d'éthanol, d'hexane, d'un mélange d'éthanol et d'hexane et enfin d'éthanol.

L'emploi d'hexane pour rincer le substrat 1 est en particulier avantageux dans le cas d'un substrat en silicium poreux, car l'hexane permet de solubiliser les précurseurs en excès qui n'ont pas réagi. De plus, l'emploi d'un bain de rinçage d'éthanol ou d'un mélange éthanol et hexane permet, grâce à la faible tension de surface de l'éthanol, de pénétrer à l'intérieur du substrat 1 et donc d'accéder à tous les pores du substrat 1. Ceci garantit alors un rinçage complet. C'est également la raison pour laquelle l'éthanol est utilisé comme solvant organique dans la solution contenant les précurseurs de thiol et d'éthylène diamine : il permet à la solution contenant les précurseurs de thiol et d'éthylène diamine de mouiller complètement le substrat en silicium poreux et donc d'atteindre tous les pores internes du substrat, ce qui garantit un greffage complet du substrat 1 en silicium poreux.

Le substrat est ensuite séché, par exemple à l'aide d'une soufflette, afin d'éliminer la majeure partie de la phase liquide ; avant d'être placé dans une étuve pendant trois heures à 110°C. Le substrat ainsi fonctionnalisé est, ensuite stocké à température ambiante jusqu'à obtenir un équilibre thermique.

La figure 2 illustre la fonctionnalisation du substrat 1 à la suite de ces opérations. L'hydrogène du groupement terminal Si-O-H est, ainsi, remplacé par le groupement -R"-NH₂ lié par liaison covalente à l'oxygène du film mince 2 en oxyde de silicium pour l'éthylène diamine et par -R-SH pour le thiol. De plus, comme représenté sur la figure 2, le greffage est en particulier réalisé par nano-domaines. Ces nanodomaines résulte d'une auto-organisation des deux types précurseurs, et plus particulièrement des deux alkoxydes de silicium utilisés comme précurseurs, lors de leurs réactions respectives avec la surface du substrat 1. Cette auto-organisation dépend, notamment, des vitesses d'hydrolyse-condensation respectives des deux précurseurs. Ainsi, la surface des nanoparticules de silice comporte, avantageusement, des zones adjacentes de dimensions nanométriques et regroupant chacune une pluralité de fonctions chimiques de même type.

La métallisation du substrat 1 greffé par des particules d'argent est, ensuite, comme illustré sur les figures 3 et 4, réalisée en plongeant le substrat dans une solution aqueuse 3 contenant des ions Ag⁺ 4 et au moins un solvant favorisant la mise en contact entre les ions métalliques et les pores du substrat 1. Pendant cette opération, la fonction thiol greffée au support 1 forme des complexes avec les ions Ag⁺ de la solution 3, tandis que la fonction éthylène diamine permet la réduction des ions Ag⁺. Il faut, cependant, noter que la fonction éthylène diamine forme également des complexes avec les ions Ag⁺, ces complexes étant, normalement, légèrement moins stables que ceux formés avec le thiol. De plus, la fonction thiol joue également un rôle chélatant pour l'argent une fois la réduction in situ réalisée.

L'opération de mise en contact des ions Ag⁺ avec le substrat 1 est, par exemple, réalisée par immersion du substrat 1 pendant 24 heures dans une solution aqueuse 3 contenant du nitrate d'argent, de l'éthanol et de l'hexane. La solution aqueuse 3 utilisée pour cet exemple contient plus particulièrement 0,45g de nitrate d'argent, 10mL d'eau, 40 mL d'éthanol et 10 mL d'hexane. En effet, comme indiqué ci-dessus, l'éthanol et l'hexane permettent chacun, grâce à leur faible tension de surface, à la solution aqueuse contenant les ions Ag⁺ de pénétrer à l'intérieur du substrat en silicium poreux 1, afin que chaque pore du substrat 1 puisse être métallisé.

Cette étape d'immersion permet donc de générer des nanoparticules d'argent 2 par réduction in situ des ions Ag⁺ et fixation des nanoparticules ainsi formées à la surface des pores du silicium. Par nanoparticules d'argent, on entend des particules d'argent ayant une taille moyenne de dimension nanométrique, c'est-à-dire avantageusement comprise entre 1 et 100 nm.

Un rinçage peut, ensuite, être réalisé par immersion successive dans plusieurs bains d'éthanol, avant de réaliser un séchage à la soufflette. Dans ce cas, l'utilisation d'hexane pour réaliser le rinçage n'est pas nécessaire. Par contre, l'utilisation d'éthanol reste nécessaire afin d'accéder à la totalité des pores du substrat 1. Il faut aussi noter que, selon la porosité de la zone en silicium poreux à métalliser, la proportion du ou des solvants organiques utilisés doivent être adaptée afin de garantir un mouillage complet de ladite zone en silicium poreux, que ce soit pour l'étape de greffage ou bien pour l'étape de croissance in-situ des nanoparticules métalliques.

Ainsi, dans l'exemple mentionné ci-dessus, les essais réalisés ont montré, dans le cas de l'argent, qu'en partant d'un nitrate d'argent (AgNO₃) comme sel métallique, il est possible de générer in situ des nanoparticules d'argent jusqu'au fond de pores ayant une largeur de quelques nanomètres et une profondeur de plusieurs centaines de nanomètres.

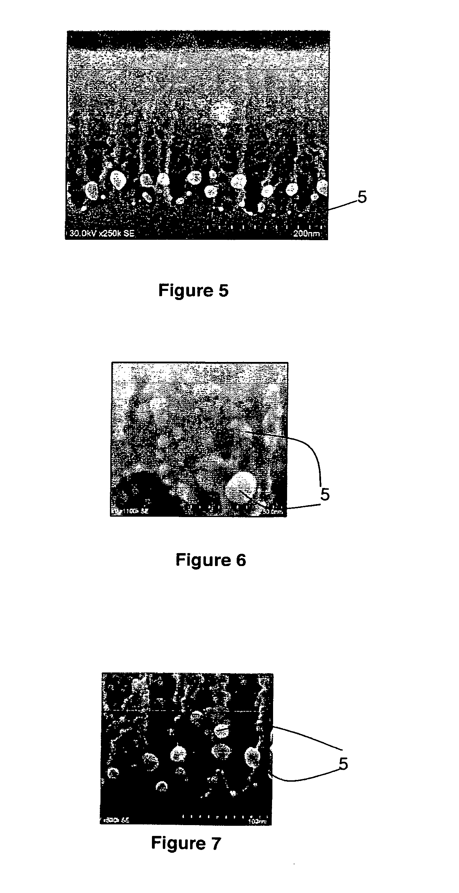

Les clichés représentés sur les figures 5 à 7 et obtenus par microscopie électronique à balayage illustrent ces essais.

La figure 5 représente une image en coupe du substrat 1 en silicium poreux avec des particules d'argent 5 fixées au fond des pores dudit substrat 1.

La figure 6 est un cliché correspondant au centre du substrat en silicium poreux. Elle montre que les parois des pores sont couvertes de particules d'argent 5.

La figure 7 est un cliché correspond au fond de pores du substrat. Elle illustre le fait que les particules 5 sont fixées jusqu'au fond des pores et qu'elles ont, pour cet échantillon, une taille importante.

Pour les essais réalisés, les particules d'argent sont discrètes. Cependant, il est aussi possible de former des nanoparticules métalliques, avec une forte densité de surface et même d'obtenir un film mince métallique continu par percolation des nanoparticules ainsi formées, si le dépôt est suffisamment dense. Un tel procédé de métallisation présente l'avantage d'être très simple à mettre en oeuvre dans la mesure où la réduction des ions métalliques est réalisée in situ et en même temps que la fixation des particules métalliques. De plus, il présente l'avantage de permettre un contrôle de la taille et de leur répartition en surface des particules métalliques formées, en contrôlant le rapport entre les deux types de fonctions chimiques présentes à la surface du support en silice.

Des essais ont aussi été réalisés avec succès avec d'autres sels métalliques : chlorure d'or, chlorure de nickel et nitrate de cuivre hydraté.

Par ailleurs, bien que les essais exposés ci-dessus ont été réalisés avec le couple chélatant/réducteur formé par un éthylène diamine et un thiol, il est possible de généraliser un tel procédé à d'autres couples chélatant/réducteur adapté au couple oxydo-réducteur formé par l'ion métallique et le métal que l'on souhaite formé à la surface du substrat. En particulier, pour les autres fonctions chimiques chélatantes/réductrices mentionnées plus haut, les précurseurs pouvant être utilisés pour réaliser l'étape de greffage sont, avantageusement, comme pour le couple thiol/éthylène diamine, des dérivés d'alcoxydes de silicium comportant respectivement les fonctions chélatante et réductrice. D'une manière générale, ils peuvent être représentés par des formules de type respectives X-R-SiZ₁Z₂Z₃ et X'-R'-SiZ'₁Z'₂Z'₃:
où :
- R et R' sont des groupements choisis parmi des chaînes alkyles C₁-C₅, insaturées ou non et des groupements phényles,
- Z₃ et Z'₃ sont des groupements chimiques choisis parmi un groupement méthoxy-, un groupement éthoxy-, un groupement propoxy-, un groupement acéthoxy-, le chlore et l'hydrogène,
- Z₁ et Z₂ sont identiques entre eux et sont un groupement chimique choisi parmi un groupement méthyle, un groupement éthyle, un groupement propyle, un groupement isopropyle, un groupement butyle, un groupement isobutyle et le groupement chimique Z₃,
- Z'₁ et Z'₂ sont identiques entre eux et sont un groupement chimique choisi parmi un groupement méthyle, un groupement éthyle, un groupement propyle, un groupement isopropyle, un groupement butyle, un groupement isobutyle et le groupement chimique Z'₃,
- X est la fonction chimique de type chélatant et X' est la fonction chimique de type réducteur.

Ainsi, pour le thiol et l'éthylène diamine, X = SH et X' = -NH-CH₂CH₂-NH₂. Il est à noter que, pour des raisons de clarté, sur les figures 2 et 3, le groupement -R'-NH-CH₂CH₂NH₂ est remplacé par -R"-NH₂, où R" = -R'-NHCH₂CH₂.

La fonction chimique réductrice pouvant être utilisée dans le procédé de métallisation peut aussi être l'ion hydrazonium (N₂H₅⁺). En effet, l'ion hydrazonium présente, comme l'hydrazine, un fort pouvoir réducteur. L'ion hydrazonium peut être greffé sur le support en silice par l'intermédiaire d'un agent de couplage de type silane présentant une fonction X". La fonction X" est une fonction chimique capable d'être remplacée par l'ion hydrazonium (N₂H₅⁺) lorsqu'une hydrolyse est réalisée avec un ajout d'hydrazine.

Ainsi, l'agent de couplage de type silane peut avantageusement être choisi parmi :
- le chlorure de Bis (Trichlorosyliléthyl)phényl sulfonyl ou Cl₃SiCH₂CH₂)₂C₆H₄SO₂Cl. Dans ce cas, l'hydrolyse du chlore permet de greffer le composé sur le support en silice. Puis, l'hydrolyse du chlorure de sulfonyle libère l'acide qui peut réagir avec l'hydrazine pour former l'ion hydrazonium.
- le 10-(Carbométhoxy)décyldiméthylchlorosilane ou CH₃OCO(CH₂)₁₀SiMe₂Cl. Dans ce cas, l'hydrolyse du chlore permet de greffer le composé sur le support en silice. Puis, l'hydrolyse de l'ester libère l'acide qui peut réagir avec l'hydrazine pour former l'ion hydrazonium.
- le 10-(Carbométhoxy)décyldiméthylmethoxysilane ou CH₃OCO(CH₂)₁₀SiMe₂OMe. Dans ce cas, l'hydrolyse de la fonction alcoxyde permet de greffer le composé sur le support en silice. Puis, l'hydrolyse de l'ester libère l'acide qui peut réagir avec l'hydrazine pour former l'ion hydrazonium.
- le 10-(Carbométhoxy)décylméthyldichlorosilane ou CH₃OCO(CH₂)₁₀SiMeCl₂. Dans ce cas, l'hydrolyse des chlores permet de greffer le composé sur le support en silice. Puis, l'hydrolyse de l'ester libérera l'acide qui peut réagir avec l'hydrazine pour former l'ion hydrazonium.
- le 10-(Carbométhoxy)décyltrichlorosilane ou CH₃OCO(CH₂)10SiCl₃. Dans ce cas, l'hydrolyse des chlores permet de greffer le composé sur le support en silice. Puis, l'hydrolyse de l'ester libère l'acide qui peut réagir avec l'hydrazine pour former l'ion hydrazonium.
- le 10-(Carbométhoxy)décyltriméthoxidesilane ou CH₃OCO(CH₂)10SiCl₃. Dans ce cas, l'hydrolyse des fonctions alcoxydes permet de greffer le composé sur le support en silice. Puis, l'hydrolyse de l'ester libère l'acide qui peut réagir avec l'hydrazine pour former l'ion hydrazonium.
- le 2-(4-Chlorosulfonylphényl)éthyltriméthoxysilane ou CISO₂C₆H₄CH₂CH₂Si(OMe)₃. Dans ce cas, l'hydrolyse des fonctions alcoxydes permet de greffer le composé sur le support en silice. Puis, l'hydrolyse du chlorure de sulfonyle libère l'acide qui peut réagir avec l'hydrazine pour former l'ion hydrazonium.
- l'éthyl-4(triethoxysilyl)benzoate ou CH₃CH₂OCOC₆H₄Si(OEt)₃. Dans ce cas, l'hydrolyse des fonctions alcoxydes permet de greffer le composé sur le support en silice. Puis, l'hydrolyse de l'ester libère l'acide qui peut réagir avec l'hydrazine pour former l'ion hydrazonium.
- l'acide triéthoxysilylpropylmaléamique ou (CH₃CH₂O)₃Si(CH₂)₂NHCOCHCHCOOH. Dans ce cas, l'hydrolyse des fonctions alcoxydes permet de greffer le composé sur le support en silice. Puis, l'acide libre peut réagir avec l'hydrazine pour former l'ion hydrazonium.
- l'acide 3-(Trihydroxysilyl)-propane sulfonique ou HOSO₂(CH₂)₃Si(OH)₃. Dans ce cas, les groupes silanols permettent le greffage sur le support en silice et le groupe acide sulfonique réagit avec l'hydrazine pour former les ions hydrazonium.

L'emploi de l'ion hydrazonium comme agent réducteur dans le procédé permet d'étendre ledit procédé de métallisation d'une zone en silicium poreux à de très nombreux métaux et métalloïdes. Avantageusement, le métal peut être ceux précédemment cités (argent, or, cuivre, platine, ruthénium, nickel, plomb et cadmium), mais également le sélénium et le tellure.

Un procédé de métallisation d'une zone en silicium poreux selon les différents modes de réalisation de l'invention présente l'avantage d'être très simple à mettre en oeuvre dans la mesure où la réduction des ions métalliques est réalisée in situ et en même temps que la fixation des particules métalliques par simple immersion de la zone à métalliser, une fois celle-ci fonctionnalisée de manière adaptée. Il permet, par ailleurs, d'obtenir une métallisation homogène dans toute l'épaisseur de la zone à métalliser, même dans des pores difficilement accessibles. Enfin, il présente l'avantage de permettre un contrôle de la taille et de la répartition des particules métalliques formées à la surface des pores de la zone à métalliser, en contrôlant le rapport entre les deux types de fonctions chimiques présentes à la surface de la zone à métalliser.

Un tel procédé peut, ainsi, être utilisé dans de nombreuses applications. En particulier, il peut être utilisé dans le domaine des piles à combustible.

À titre d'exemple, le procédé de métallisation d'une zone en silicium poreux peut être utilisé pour former une couche de diffusion de gaz réactifs, poreuse et conductrice électriquement d'une pile à combustible de type échangeuse de protons (« PEM »). La couche de diffusion forme, en général, avec une couche catalytique correspondante une des électrodes de la pile à combustible. Ceci est particulièrement intéressant dans le cas des piles à combustibles présentant une forte densité de puissance et destinée à être utilisée pour des applications de petite et moyenne puissance, telles que le domaine de l'alimentation électrique des micro-ordinateurs ou de groupes électrogènes de secours.

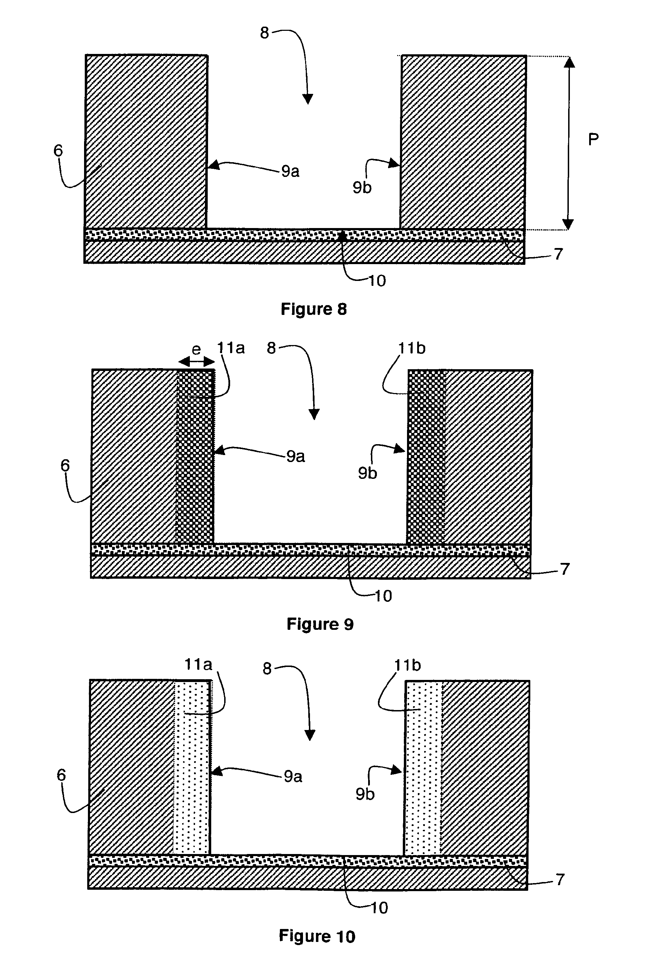

Selon un exemple particulier, un tel procédé de métallisation peut s'intégrer dans un procédé de fabrication d'une pile à combustible, telle que celle décrite dans la demande de brevet internationale déposée par la Demanderesse, le 07/05/2009 sous le numéro de dépôt PCT/FR2009/000540 et comme illustré par les figures 8 à 11.

Ainsi, sur la figure 8, un substrat de support 6 en silicium muni d'une couche électriquement isolante 7 enterrée est gravée localement pour réaliser au moins une tranchée (ou ouverture profonde) 8, avec un arrêt de gravure sur la couche isolante 7. L'étape de gravure peut être réalisée par gravure réactive profonde (RIE) ou par gravure chimique (KOH).

La tranchée 8 ainsi formée est délimitée, sur la figure 8, par deux parois latérales opposées 9a et 9b et un fond 10 formé par la surface de la couche isolante 7 libérée par l'opération de gravure. De plus, la tranchée 8 présente, une profondeur P avantageusement supérieure ou égale à 10 micromètres et encore plus avantageusement supérieure ou égale à 400 micromètres, pour un substrat en silicium présentant une épaisseur pouvant aller de quelques micromètres jusqu'à 750 micromètres (cas des plaquettes de silicium de 200 mm de diamètre).

Au moins une partie superficielle de deux parois latérales 9a et 9b est, ensuite, rendue poreuse comme illustré par les zones 11 a et 11 b sur la figure 9. En particulier, les zones 11 a et 11 b peuvent être obtenues par dissolution anodique en présence d'acide fluorhydrique. Elles ont, avantageusement, une épaisseur e de quelques micromètres. À titre d'exemple, l'épaisseur e est comprise entre 0,5 et 5 micromètres. Les zones 11 a et 11 b sont avantageusement rendues poreux à l'aide d'une solution d'acide fluorhydrique à 5%, avec des densité de courant de l'ordre de 10 mA/cm² et des temps d'anodisation de l'ordre de 600 s.

Lesdites zones 11a et 11b sont, ensuite, métallisées afin de les rendre conductrices électriquement. L'étape de métallisation est, donc, réalisée en greffant les zones 11a et 11b par deux types de fonctions chimiques distinctes respectivement chélatante et réductrice. À titre d'exemple, les fonctions chimiques sont un thiol et une éthylène diamine.

Une fois la fonctionnalisation des zones 11 a et 11 b réalisée, lesdites zones sont mises en contact avec une solution aqueuse contenant des ions métalliques, par exemple Ag⁺, afin de réaliser la réduction in situ des ions métalliques et la fixation des particules métalliques obtenues à la surface des pores.

Les zones 11 a et 11 b ainsi métallisées peuvent alors formées des couches minces de diffusion de gaz conductrices électriquement pour une pile à combustible réalisée dans la tranchée 8.

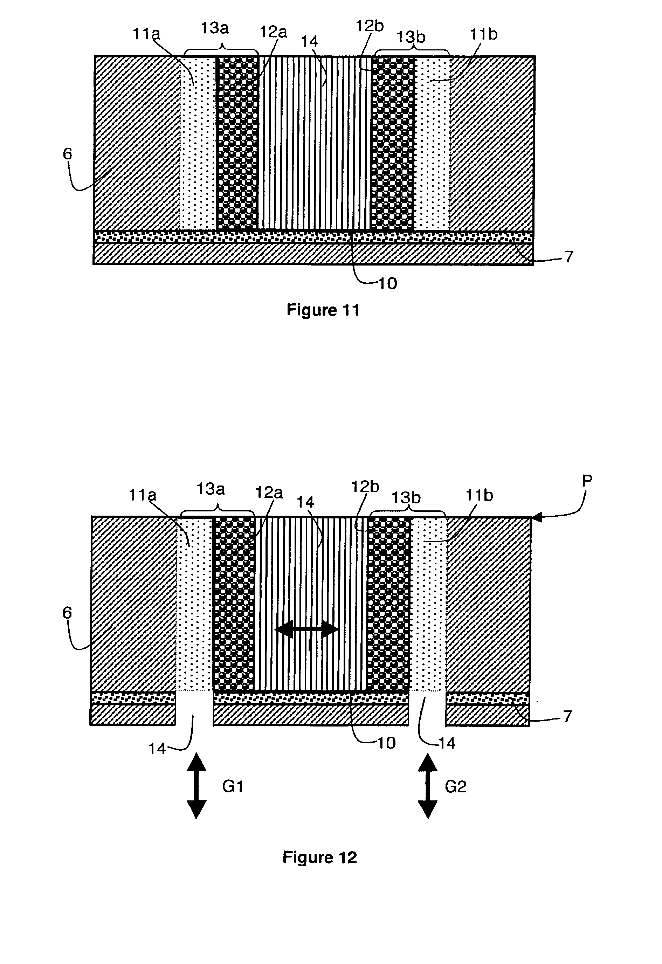

Dans ce cas, les zones 11 a et 11 b sont chacune associées à des couches catalytiques 12a et 12b déposées, sur les parois latérales 9a et 9b de la tranchée 8, afin de former les électrodes respectives 13a et 13b de la pile à combustible (voir figure 11). Les couches catalytiques 12a et 12b sont, par exemple, déposées par PECVD de platine ou par électrodéposition.

Une membrane électrolytique 14 est, ensuite, formée entre les deux couches catalytiques afin de combler la tranchée 8. Elle est, par exemple, réalisée en remplissant la tranchée 8 par jet d'encre par une solution à base de Nafion®. Enfin, pour finaliser la pile à combustible, la tranchée 8 peut être obturée par dépôt d'un film polymère, ajouré en regard des zones 11a et 11 b.

Une telle pile à combustible présente, en particulier, l'avantage de séparer les fonctions de conduction électrique et d'étanchéité, tout en facilitant l'assemblage de la pile. Cela permet d'optimiser la densité de puissance et de réduire la perte ohmique.

Dans une variante de réalisation, des passages 14 peuvent être ménagés dans le substrat de support 6, sous les couches de diffusion poreuses 11a et 11 b afin de permettre aux fluides de circuler perpendiculairement au plan P du substrat de support 6 (flèches G1 et G2) alors que le courant circule parallèlement au plan P du substrat de support 6 (flèche I).

Par ailleurs, les zones 11a et 11b métallisées peuvent subir une siliciuration ultérieure, totale (avec consommation complète du silicium) ou partielle, afin d'améliorer les performances électriques et notamment la résistance de contact du dispositif. La siliciuration consiste, alors, à effectuer un recuit rapide (également connu sous le sigle « RTA ») permettant une diffusion réactive entre le métal et le silicium, en vue de former un composé intermétallique conducteur électriquement. Le recuit est, avantageusement, réalisé à une température comprise entre 200°C et 800°C, selon le métal utilisé et la phase physicochimique recherchée. A titre d'exemple, il est possible d'obtenir les siliciures suivants : NiSi, NiSi₂, PtSi, TiSi, CoSi₂...

## Revendications

1. Procédé de métallisation d'au moins une zone en silicium poreux (1) comprenant des groupements hydroxydes terminaux, **caractérisé en ce que** la métallisation est réalisée lors d'une étape de mise en contact de ladite zone (1) avec des ions métalliques (4) dissous dans une solution aqueuse (3) contenant au moins un solvant organique favorisant ladite mise en contact, ladite zone (1) ayant été, préalablement à l'étape de mise en contact, greffée par deux types distincts de fonctions chimiques, respectivement réducteur pour les ions métalliques et chélatant pour les ions métalliques et/ou pour le métal correspondant auxdits ions métalliques.

2. Procédé selon la revendication 1, **caractérisé en ce que** le greffage de ladite zone (1) est contrôlé pour former des premières et secondes zones adjacentes regroupant chacune une pluralité de fonctions chimiques de même type.

3. Procédé selon l'une des revendications 1 et 2, **caractérisé en ce que** les fonctions chimiques de type chélatant sont choisies parmi un thiol, un dithiane, l'EDTA, un acide thioglycolique, un acide carboxylique, un acide phosphonique, un acide sulfonique et leurs dérivés.

4. Procédé selon l'une quelconque des revendications 1 à 3, **caractérisé en ce que** les fonctions chimiques de type réducteur sont choisies parmi une amine, de l'éthylène diamine, un sucre, un acide ascorbique, un ascorbate, l'hydroquinone et leurs dérivés.

5. Procédé selon l'une quelconque des revendications 1 à 4, **caractérisé en ce que** le greffage de deux types de deux fonctions chimiques est obtenu lors d'une même étape consistant à tremper ladite zone (1) dans une solution comprenant de l'éthanol, un précurseur comprenant une fonction chimique de type chélatant et un précurseur comprenant une fonction chimique de type réducteur, suivi d'au moins une étape d'élimination des précurseurs n'ayant pas réagi.

6. Procédé selon la revendication 5, **caractérisé en ce que** les précurseurs comprenant respectivement une fonction chimique de type chélatant et une fonction chimique de type réducteur répondent aux formules chimiques respectives X-R-SiZ₁Z₂Z₃ et X'-R'-SiZ'₁Z'₂Z'₃ :
où :
- R et R' sont des groupements choisis parmi des chaînes alkyles C₁-C₅, insaturées ou non et des groupements phényles,
- Z₃ et Z'₃ sont des groupements chimiques choisis parmi un groupement méthoxy-, un groupement éthoxy-, un groupement propoxy-, un groupement acéthoxy-, le chlore et l'hydrogène,
- Z₁ et Z₂ sont identiques entre eux et sont un groupement chimique choisi parmi un groupement méthyle, un groupement éthyle, un groupement propyle, un groupement isopropyle, un groupement butyle, un groupement isobutyle et le groupement chimique Z₃,
- Z'₁ et Z'₂ sont identiques entre eux et sont un groupement chimique choisi parmi un groupement méthyle, un groupement éthyle, un groupement propyle, un groupement isopropyle, un groupement butyle, un groupement isobutyle et le groupement chimique Z'₃,
- X est la fonction chimique de type chélatant et X' est la fonction chimique de type réducteur.

7. Procédé selon la revendication 6, **caractérisé en ce que** la zone (1) est greffée par la fonction chimique thiol et par la fonction chimique éthylène diamine.

8. Procédé selon la revendication 7, **caractérisé en ce que** le précurseur comprenant la fonction chimique thiol est le 3-mercaptopropyltriéthoxysilane et le précurseur comprenant la fonction chimique éthylène diamine est le 2-(aminoéthyl)aminopropyltrimétoxysilane ou un de ses oligomères.

9. Procédé selon l'une quelconque des revendications 1 à 3, **caractérisé en ce que** les fonctions chimiques de type réducteur sont des ions hydrazoniums.

10. Procédé selon l'une quelconque des revendications 1 à 9, **caractérisé en ce que** le métal est choisi parmi l'or, l'argent, le cuivre, le platine, le ruthénium, le nickel, le plomb, le cadmium, le sélénium et le tellure.

11. Procédé selon l'une quelconque des revendications 1 à 10, **caractérisé en ce que** la zone en silicium poreux (1) est mésoporeuse.

12. Procédé selon l'une quelconque des revendications 1 à 11, **caractérisé en ce que** la solution aqueuse (3) contient de l'éthanol et de l'hexane.

13. Utilisation d'une zone métallisée obtenue par un procédé selon l'une quelconque des revendications 1 à 12, comme couche de diffusion poreuse électriquement conductrice (11a, 11b) d'une pile à combustible.

14. Utilisation selon la revendication 13, **caractérisée en ce que** la zone métallisée est formée par au moins une partie superficielle d'une paroi latérale (9a, 9b) d'une tranchée (8) formée dans un substrat en silicium (6).

## Claims

1. Method for metallization of at least a porous silicon zone (1) comprising terminal hydroxide groups, **characterized in that** metallization is performed during a step of bringing the porous silicon zone (1) into contact with metallic ions (4) dissolved in an aqueous solution (3) containing at least an organic solvent promoting the step of bringing into contact and **characterized in that** said porous silicon zone (1), prior to the step of bringing into contact, has been grafted by two distinct types of chemical functions, respectively reducing for the metallic ions and chelating for the metallic ions and/or for the metal corresponding to said metallic ions.

2. Method according to claim 1, **characterized in that** grafting of said porous silicon zone (1) is controlled to form adjacent first and second areas each grouping a plurality of chemical functions of the same type.

3. Method according to any one of claims 1 and 2, **characterized in that** the chemical functions of chelating type are chosen from a thiol, a dithiane, EDTA, a thioglycolic acid, a carboxylic acid, a phosphonic acid, a sulfonic acid and derivatives thereof.

4. Method according to any one of claims 1 to 3, **characterized in that** the chemical functions of reducing type are chosen from an amine, ethylene diamine, a sugar, an ascorbic acid, an ascorbate, hydroquinone and derivatives thereof.

5. Method according to any one of claims 1 to 4, **characterized in that** grafting of two types of two chemical functions is obtained in a single step consisting in immersing the porous silicon zone (1) in a solution comprising ethanol, a precursor comprising a chemical function of chelating type and a precursor comprising a chemical function of reducing type and it is followed by at least an elimination step of the precursors that did not react.

6. Method according to claim 5, **characterized in that** the precursors respectively comprising a chemical function of chelating type and a chemical function of reducing type comply with the respective chemical formulas X-R-SiZ₁Z₂Z₃ and X'-R'-SiZ'₁Z'₂Z'₃ :
where:
- R and R' are groups chosen from the C₁-C₅ alkyl chains, unsaturated or not, and from the phenyl groups,
- Z₃ and Z'₃ are chemical groups chosen from a methoxy- group, an ethoxy-group, a propoxy- group, an acethoxy- group, chlorine and hydrogen,
- Z₁ and Z₂ are identical to one another and are a chemical group chosen from a methyl group, an ethyl group, a propyl group, an isopropyl group, a butyl group, an isobutyl group and the Z₃ chemical group,
- Z'₁ and Z'₂ are identical to one another and are a chemical group chosen from a methyl group, an ethyl group, a propyl group, an isopropyl group, a butyl group, an isobutyl group and the Z'₃ chemical group,
- X is the chemical function of chelating type and X' is the chemical function of reducing type.

7. Method according to claim 6, **characterized in that** the porous silicon zone (1) is grafted by the thiol chemical function and by the ethylene diamine chemical function.

8. Method according to claim 7, **characterized in that** the precursor comprising the thiol chemical function is 3-mercaptopropyltriethoxysilane and the precursor comprising the ethylene diamine chemical function is 2-(aminoethyl)aminopropyltrimetoxysilane or one of its oligomers.

9. Method according to any one of claims 1 to 3, **characterized in that** the chemical functions of reducing type are hydrazonium ions.

10. Method according to any one of claims 1 to 9, **characterized in that** the metal is chosen from gold, silver, copper, platinum, ruthenium, nickel, lead, cadmium, selenium and tellurium.

11. Method according to any one of claims 1 to 10, **characterized in that** the porous silicon zone (1) is mesoporous.

12. Method according to any one of claims 1 to 11, **characterized in that** the aqueous solution (3) contains ethanol and hexane.

13. Use of a metallized zone obtained by a method according to any one of claims 1 to 12 as electrically conducting porous diffusion layer (11a, 11b) of a fuel cell.

14. Use according to claim 13, **characterized in that** the metallized zone is formed by at least one superficial part of a side wall (9a, 9b) of a trench (8) formed in a silicon substrate (6).

## Patentansprüche

1. Verfahren zur Metallisierung einer Zone aus porösem Silizium (1), die endständige Hydroxid-Gruppen enthält,
**dadurch gekennzeichnet,**
**dass** die Metallisierung in einem Verfahrensschritt durchgeführt wird, bei dem die genannte Zone (1) mit Metall-Ionen (4) in Kontakt gebracht wird, die in einer wässrigen Lösung (3) aufgelöst sind, welche mindestens ein organisches Lösungsmittel enthält, das dieses In-Kontakt-Bringen begünstigt, wobei die Zone (1) vor dem Verfahrensschritt des In-Kontakt-Bringens einer Pfropfung mit zwei unterschiedlichen Typen von funktionellen Gruppen unterzogen worden ist, und zwar einer reduzierenden betreffend die Metall-Ionen bzw. einer chelatbildenden betreffend die Metall-Ionen und/oder das diesen Metall-Ionen entsprechende Metall.

2. Verfahren nach Anspruch 1,
**dadurch gekennzeichnet,**
**dass** die Pfropfung der genannten Zone (1) gesteuert wird, um erste und zweite aneinandergrenzende Zonen zu bilden, die jeweils mehrere funktionelle Gruppen des gleichen Typs besitzen.

3. Verfahren nach einem der Ansprüche 1 und 2,
**dadurch gekennzeichnet,**
**dass** die funktionellen Gruppen des chelatbildenden Typs aus einem Thiol, einem Dithian, der EDTA, einer Thioglykol-Säure, einer Carboxylsäure, einer Phosphonsäure, einer Sulfosäure und deren Derivaten gewählt sind.

4. Verfahren nach einem der Ansprüche 1 bis 3,
**dadurch gekennzeichnet,**
**dass** die funktionellen Gruppen des reduzierenden Typs aus einem Amin, Ethylendiamin, einem Zucker, einer Ascorbinsäure, einem Ascorbat, Hydrochinon und deren Derivaten gewählt sind.

5. Verfahren nach einem der Ansprüche 1 bis 4,
**dadurch gekennzeichnet,**
**dass** die Pfropfung mit zwei Typen von funktionellen Gruppen in einem einzigen Verfahrensschritt erzielt wird, der darin besteht, diese Zone (1) in eine Lösung zu tauchen, die Ethanol enthält sowie einen Präkursor, der eine funktionelle Gruppe des chelatbildenden Typs und eine funktionelle Gruppe des reduzierenden Typs enthält, gefolgt von mindestens einem Verfahrensschritt der Elimination der Präkursoren, die nicht reagiert haben.

6. Verfahren nach Anspruch 5,
**dadurch gekennzeichnet,**
**dass** die Präkursoren, die eine funktionelle Gruppe des chelatbildenden Typs bzw. eine funktionelle Gruppe des reduzierenden Typs enthalten, den chemischen Formeln X-R-SiZ₁Z₂Z₃ bzw. X'-R'-SiZ'₁Z'₂Z'₃ entsprechen, wobei
- R und R' Gruppen sind, die aus den Alkyl-Ketten, ungesättigt oder nicht, und aus den Phenyl-Gruppen gewählt sind,
- Z₃ und Z'₃ funktionelle Gruppen sind, die aus einer Methoxy-Gruppe, einer Ethoxy-Gruppe, einer Propoxy-Gruppe, einer Acethoxy-Gruppe, einer Chlor und Wasserstoff gewählt sind,
- Z₁ und Z₂ identisch miteinander sind und eine funktionelle Gruppe sind, die aus einer Methyl-Gruppe, einer Ethyl-Gruppe, einer Propyl-Gruppe, einer Isopropyl-Gruppe, einer Butyl-Gruppe, einer Isobutyl-Gruppe und der funktionellen Gruppe Z₃ gewählt sind,
- Z'₁ und Z'₂ identisch miteinander sind und eine funktionelle Gruppe sind, die aus einer Methyl-Gruppe, einer Ethyl-Gruppe, einer Propyl-Gruppe, einer Isopropyl-Gruppe, einer Butyl-Gruppe, einer Isobutyl-Gruppe und der funktionellen Gruppe Z'₃ gewählt sind,
- X die funktionelle Gruppe des chelatbildenden Typs ist und X' die funktionelle Gruppe des reduzierenden Typs ist.

7. Verfahren nach Anspruch 6,
**dadurch gekennzeichnet,**
**dass** die Zone (1) mit der funktionellen Gruppe Thiol und mit der funktionellen Gruppe Ethylendiamin gepfropft wird.

8. Verfahren nach Anspruch 7,
**dadurch gekennzeichnet,**
**dass** der Präkursor, der die funktionelle Gruppe Thiol enthält, 3-Mercaptopropyltriethoxysilan ist und der Präkursor, der die funktionelle Gruppe Ethylendiamin enthält, 2-(Aminoethyl-)Aminopropyltrimethoxysilan oder eines von dessen Oligomeren ist.

9. Verfahren nach einem der Ansprüche 1 bis 3,
**dadurch gekennzeichnet,**
**dass** die funktionellen Gruppen des reduzierenden Typs Hydrazonium-Ionen sind.

10. Verfahren nach einem der Ansprüche 1 bis 9,
**dadurch gekennzeichnet,**
**dass** das Metall unter Gold, Silber, Kupfer, Platin, Ruthenium, Nickel, Blei, Kadmium, Selen und Tellur gewählt ist.

11. Verfahren nach einem der Anspruche 1 bis 10,
**dadurch gekennzeichnet,**
**dass** die Zone aus porösem Silizium (1) mesoporös ist.

12. Verfahren nach einem der Ansprüche 1 bis 11,
**dadurch gekennzeichnet,**
**dass** die wässrige Lösung (3) Ethanol und Hexan enthält.

13. Anwendung einer metallbeschichteten Zone, die durch ein Verfahren nach einem der Ansprüche 1 bis 12 hergestellt wurde, als elektrisch leitende, poröse Diffusionsschicht (11a, 11b) einer Brennstoffzelle.

14. Anwendung nach Anspruch 13,
**dadurch gekennzeichnet,**
**dass** die metallbeschichtete Zone von mindestens einem Teil der Oberfläche einer Seitenwand (9a, 9b) eines Einschnitts (8) gebildet wird, der in einem Substrat aus Silizium (6) ausgeführt ist.
